# DEMANDE DE BREVET EUROPEEN

(11) **EP 1 650 543 A2**
(43) Date de publication de la demande: **26.04.2006**
(21) Numéro de dépôt: 05109723.6
(22) Date de dépôt: 19.10.2005
(51) Int. Cl.: G01M 17/02

(54) **Méthode de décoincement d'un pneumatique**

(30) Priorité: 25.10.2004 FR 0411422
(71) Demandeur: Societe de Technologie Michelin, 63000 Clermont-Ferrand (FR); MICHELIN RECHERCHE ET TECHNIQUE S.A., 1763 Granges-Paccot (CH)
(72) Inventeur: Tatraux-Paro, Jean-Michel, 63000 Clermont-Ferrand (FR); Gauthier, Patrice, 63720 Chappes (FR)
(74) Mandataire: Bauvir, Jacques

(57) **Abrégé**

L'invention concerne une méthode pour déterminer la résistance au décoincement d'au moins un pneumatique monté sur une jante de montage et gonflé à une pression prédéterminée, cette méthode consistant à : (A) équiper un véhicule (10) avec le pneumatique sur une position d'un essieu directeur (21) ; (B) mettre en mouvement le véhicule (10) et le stabiliser à une vitesse prédéterminée ; (C) imposer, par rotation du volant, un angle au volant, et le maintenir pendant un temps prédéterminé, le véhicule (10) avançant à la vitesse prédéterminée, de manière à ce que le pneumatique parcoure une portion de trajectoire en arc de cercle (75-79 ; 121-125) ; (D) répéter l'étape (C), en augmentant progressivement l'angle au volant jusqu'à ce qu'au moins une condition choisie parmi : (i) le décoincement du pneumatique, ou (ii) l'arrivée à la butée du volant du véhicule (10), soit satisfaite.

## Description

La présente invention concerne les méthodes d'essai pour pneumatiques.

### ARRIERE-PLAN

Par « décoincement » d'un pneumatique, on entend la sortie d'au moins un des bourrelets du pneumatique hors de tout ou partie du siège de la jante sur laquelle le pneumatique est monté. La capacité d'un pneumatique à résister au décoincement fait partie des caractéristiques importantes pour la sécurité des utilisateurs d'un véhicule équipé de pneumatiques, car le décoincement s'accompagne d'une dégradation majeure des performances de roulage. L'étude du phénomène a montré qu'il y a deux types de décoincement : (1) le décoincement résultant de chocs violents sur le flanc ou la bande de roulement du pneumatique, comme par exemple un choc contre un trottoir ou le passage du pneumatique sur un trou dans la chaussée, et (2) le décoincement en présence de contraintes mécaniques très fortes, comme par exemple lors d'un roulage dans un virage à faible rayon de courbure et à vitesse élevée, le tout éventuellement aggravé par une pression de gonflage inférieure à la pression de service. L'invention concerne une méthode d'essai pour quantifier le comportement de pneumatiques par rapport au décoincement du deuxième type.

On distingue deux catégories de méthodes d'essai permettant d'étudier et de quantifier le décoincement d'un pneumatique : les méthodes d'essai sur machine et les méthodes d'essai sur piste. Un exemple de méthode d'essai sur machine est décrit dans le brevet US 3 662 597 selon lequel une forme conique est appliquée contre un flanc du pneumatique, puis la pression exercée contre le flanc est augmentée et le déplacement du flanc est enregistré. Une méthode d'essai similaire a été retenue dans le « Federal Motor Vehicle Safety Standard No. 109 » de la NHTSA (National Highway Traffic Safety Administration), l'organisme fédéral de sécurité routière américain.

Un autre dispositif a été proposé dans la demande de brevet WO 02 090919 : de nouveau, un effort est appliqué sur le pneumatique monté sur une jante et gonflé à une pression donnée, mais contrairement à la méthode décrite dans le document US 3 662 597, on applique l'effort non pas au flanc du pneumatique, mais à la partie du pneumatique destinée à être en contact avec le sol, jusqu'à ce que se produise un décoincement.

Les essais sur piste sont complémentaires aux essais sur machine, car ils placent le pneumatique dans des conditions plus proches des conditions d'utilisation sur un véhicule. Souvent l'homologation d'un pneumatique par un constructeur de véhicules dépend, entre autres, des résultats obtenus dans des essais de décoincement sur piste. Ces essais sont particulièrement critiques lorsqu'il s'agit de pneus conçus spécifiquement pour permettre le roulage à pression faible voire nulle, appelés ci-après « pneumatiques pour roulage à plat » sans détérioration significative des performances en roulage.

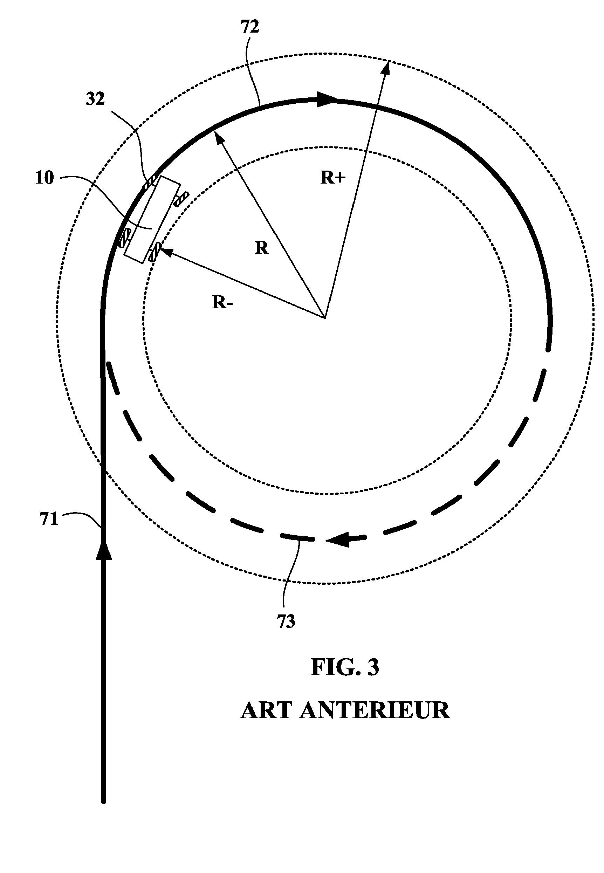

Les essais de décoincement connus de l'art antérieur se font en général dans la configuration dite « J-turn » ou « U-turn ». Comme le montre la figure 3, un véhicule équipé du pneumatique à tester est lancé à une vitesse constante sur une ligne droite, puis dans un virage dont le rayon de courbure est prédéfini. Différents passages sont réalisés en diminuant la pression du pneumatique à chaque passage, jusqu'à ce qu'un décoincement se produise. Le brevet US 4 700 765 décrit ce type d'essai, effectué à une vitesse de 50 km/h et avec un rayon de courbure de 20 mètres, mais d'autres combinaisons ont été proposées : 60 km/h et 25 mètres (EP 334 955), 60 km/h et 30 mètres (EP 377 338), 40 km/h et 25 mètres (EP 1 036 675) et même 35.5 km/h et 6 mètres (EP 376 137). Une variante de l'essai comprend un tour complet au rayon de courbure prédéfini (US 5 253 692).

Dans les conditions habituelles de test, les pneus de tourisme non spécifiquement conçus pour permettre le roulage à pression faible voire nulle subissent le décoincement à des pressions de gonflage de l'ordre de 1 bar. Lorsqu'il s'agit de pneus conçus pour permettre le roulage à des pressions de gonflage bien inférieures à 1 bar sans détérioration significative des performances en roulage, la méthode doit être adaptée. L'essai est effectué à une pression de gonflage nulle ; on effectue des passages de type « J-turn » jusqu'au décoincement, soit à vitesse constante (EP 377 338), soit en augmentant progressivement la vitesse (EP 334 955). Le nombre de passages sans décoincement sert d'indicateur de performance du pneumatique.

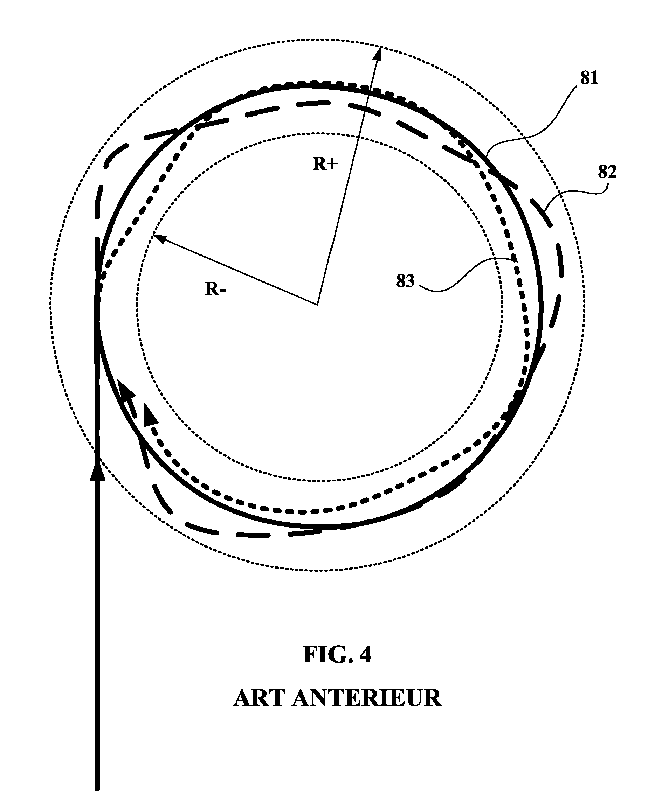

Une des difficultés de cette approche réside dans la reproductibilité non satisfaisante des résultats, due au fait que l'angle au volant pendant le virage n'est pas maîtrisée. Par « angle au volant », on entend l'angle de rotation qu'un pilote impose au volant d'un véhicule afin de modifier la trajectoire du véhicule. En principe, le pilote d'essai doit maintenir le pneumatique à évaluer sur la trajectoire idéale (rayon de courbure préconisé), mais la trajectoire réellement effectuée n'en est qu'une approximation, comme le montre la figure 4. Pour être valable, la trajectoire doit se situer à l'intérieur des limites formées par les cercles de rayon R+ et R-. Or, une multitude de trajectoires est possible à l'intérieur de ces limites : un pilote peut aborder le virage en imposant un angle au volant élevé, puis corriger cet angle vers des valeurs moins importantes, ou inversement commencer la manoeuvre avec un faible angle au volant, puis corriger pour rester à l'intérieur des limites. Cette marge de manoeuvre entraîne une faible reproductibilité. Un autre inconvénient de l'approche précédente réside dans son pouvoir discriminatoire très réduit. Très souvent, elle est utilisée comme test binaire (le pneumatique satisfait ou non au critère imposé) et ne permet pas d'établir un classement de pneumatiques ayant satisfait le critère : ainsi il est impossible de départager deux types de pneumatiques ayant résisté au décoincement après un nombre de passages préconisé.

Le brevet US 6 580 980 apporte une meilleure reproductibilité, en proposant une variante de la méthode permettant de s'affranchir de la variation de l'angle au volant. Le pilote du véhicule roulant en ligne droite change soudainement l'angle au volant (en général vers une valeur autour de 180°), avec une vitesse angulaire importante (de l'ordre de 300° par seconde). La performance du pneumatique est évaluée en fonction du nombre de bourrelets (0, 1 ou 2) du pneumatique ayant subi un décoincement. D'autres paramètres, comme le niveau maximal de l'accélération transversale du véhicule pendant le test ou encore la déviation de la trajectoire préconisée peuvent servir à évaluer la performance en décoincement.

Si cette méthode résout le problème de la reproductibilité de l'angle au volant, elle présente néanmoins l'inconvénient de se limiter à un seul angle au volant, ce qui réduit la quantité des données exploitables et la finesse du classement.

Par conséquent, il existe un besoin d'une méthode d'essai d'un pneumatique, permettant de déterminer la capacité d'un pneumatique à résister au décoincement et d'établir un classement entre plusieurs pneumatiques de conception différente.

### RESUME DE L'INVENTION

Conformément à l'invention, il est proposé une méthode pour déterminer la résistance au décoincement d'au moins un pneumatique monté sur une jante de montage et gonflé à une pression prédéterminée, cette méthode consistant à :
(A) équiper un véhicule avec le pneumatique sur une position d'un essieu directeur ;
(B) mettre en mouvement le véhicule et le stabiliser à une vitesse prédéterminée ;
(C) imposer, par rotation du volant, un angle au volant, et le maintenir pendant un temps prédéterminé, le véhicule avançant à la vitesse prédéterminée, de manière à ce que le pneumatique parcoure une portion de trajectoire en arc de cercle ;
(D) répéter l'étape (C), en augmentant progressivement l'angle au volant jusqu'à ce qu'au moins une condition choisie parmi :
   (i) le décoincement du pneumatique, ou
   (ii) l'arrivée à la butée du volant du véhicule,
   soit satisfaite.

Le pilote peut imposer un premier angle au volant dès avant la stabilisation de la vitesse. Par exemple, cela peut s'avérer nécessaire lorsque la pression de gonflage du ou des pneumatiques à évaluer est abaissée. Il est possible d'imposer le premier angle au volant lorsque le véhicule est encore à l'arrêt, puis de mettre en mouvement le véhicule et de le stabiliser à la vitesse prédéterminée. On considère alors l'arc de cercle parcouru après stabilisation à la vitesse prédéterminée, puis on procède à l'augmentation progressive de l'angle au volant.

La trajectoire parcourue par le véhicule dans un essai selon la méthode de l'invention comprend une pluralité d'arcs de cercle, chacun de ces arcs de cercle correspondant à une valeur imposée de l'angle au volant. Les arcs de cercle constituent la « partie utile » de la trajectoire, c'est-à-dire la partie servant à déterminer la capacité du pneumatique à résister au décoincement. Deux arcs de cercle consécutifs peuvent être séparés par une portion de trajectoire intermédiaire ou non. Toute la partie utile doit être parcourue à la vitesse prédéterminée, mais il n'y a pas de condition portant sur la vitesse à laquelle une éventuelle portion de trajectoire intermédiaire est parcourue.

Dans le présent document, on entend par augmentation de l'angle au volant l'augmentation de sa valeur absolue, indépendamment du sens de rotation du volant. Deux rotations successives du volant, servant chacune à imposer un angle au volant, peuvent se faire dans le même sens ou en sens opposé l'une par rapport à l'autre. Autrement dit, le sens de rotation du volant peut être inversé ou non pour deux arcs de cercle successifs.

L'augmentation progressive de l'angle au volant se traduit par une diminution progressive du rayon de courbure des arcs de cercle parcourus par le véhicule. L'augmentation progressive de l'angle au volant n'exclut pas la possibilité d'imposer deux ou plusieurs fois le même angle au volant avant d'augmenter l'angle au volant.

Selon un mode de réalisation préférentiel le véhicule est déplacé, avant chaque augmentation de l'angle au volant, de manière à ce que toutes les portions de trajectoire en arc de cercle aient sensiblement le même point de départ. Ainsi, deux arcs de cercle consécutifs sont séparés par une portion de trajectoire intermédiaire permettant de déplacer le véhicule de manière à ce que toutes les portions de trajectoire en arc de cercle constituant la partie utile de la trajectoire aient sensiblement la même origine. Ce mode de réalisation est avantageux dans la mesure où il permet de remettre le pneumatique sensiblement dans les mêmes conditions de sollicitation et au même état thermique avant de parcourir chaque arc de cercle. Ce mode de réalisation permet également d'effectuer les tests sur une surface assez réduite.

Selon un deuxième mode de réalisation préférentiel, la trajectoire parcourue par le pneumatique jusqu'à atteindre l'une des deux conditions (i) et (ii) est une succession ininterrompue d'arcs de cercle. Ce mode de réalisation est avantageux parce qu'il évite des manoeuvres intermédiaires : ainsi, la durée de chaque essai peut être réduite. Un autre avantage de ce mode de réalisation est de permettre une automatisation des essais. En effet, la stabilisation de la vitesse du véhicule et l'augmentation de l'angle au volant jusqu'au décoincement du pneumatique peuvent être facilement effectuées par un automatisme embarqué.

Lors de la mise en ouvre du deuxième mode de réalisation préférentiel, l'augmentation de l'angle au volant peut être continue, avec une vitesse de rotation du volant constante ou variable, mais elle peut également se faire par pas de valeurs discrètes, chaque nouvelle valeur étant conservée pendant un temps prédéterminé, ce qui correspond également à une distance parcourue prédéterminée (la vitesse du véhicule étant constante).

Lorsqu'on augmente l'angle au volant par pas de valeurs discrètes, il est préférable de maintenir chaque valeur d'angle pendant une certaine durée afin d'obtenir la stabilisation des contraintes dans la zone de contact entre pneumatique et chaussée. Préférentiellement, la première augmentation de l'angle au volant à une valeur égale à un angle α0 (alpha 0) différent de 0° qui amène le pneumatique à parcourir la première portion de trajectoire formée d'un arc de cercle est plus importante que les augmentations suivantes Δα (delta alpha) qui correspondent à des fractions de l'angle α0 (alpha 0). Le choix d'une augmentation importante en début d'essai permet de passer rapidement sur un domaine où le décoincement ne devrait pas avoir lieu et de réduire ainsi la durée de l'essai. Lorsque l'essai est conduit selon le deuxième mode de réalisation préférentiel, cette forte augmentation initiale permet également de réduire la surface de terrain nécessaire pour effectuer l'essai : en effet, un petit angle au volant entraîne un grand rayon de courbure de la trajectoire et, par conséquent, un rayon important de l'arc de cercle parcouru par le pneumatique. Par la suite, on augmente l'angle au volant en pas Δα (delta alpha) plus petits afin d'obtenir une mesure plus fine du comportement du pneumatique.

De préférence, les augmentations de l'angle au volant sont effectuées avec des vitesses de rotation du volant supérieures à 300°, et préférentiellement supérieures à 500° par seconde, car cela permet de réduire le temps pendant lequel le pneumatique est sollicité dans des conditions transitoires.

Afin de limiter les écarts des valeurs d'angle au volant prédéterminées, le véhicule dispose préférentiellement d'un moyen d'assistance pour obtenir rapidement un angle au volant prédéterminé. Il peut s'agir d'un simple marquage sur le volant et sur le tableau de bord mais il est également possible d'effectuer une mesure de l'angle au volant et d'afficher la valeur mesurée en temps réel sur le tableau de bord du véhicule. Le véhicule peut également être équipé de moyens mécaniques permettant d'atteindre rapidement et précisément un angle au volant donné.

La méthode selon l'invention permet d'évaluer simultanément un nombre de pneumatiques correspondant au double du nombre d'essieux directeurs du véhicule. A titre d'exemple, on peut évaluer simultanément deux pneumatiques montés sur l'unique essieu directeur d'un véhicule de tourisme. Préférentiellement, un seul pneumatique est évalué pendant chaque essai. De façon préférentielle, les autres pneumatiques sont gonflés à la pression nominale afin de ne pas modifier le comportement du véhicule en virage. Si le pneumatique à évaluer est un pneumatique pour roulage à plat, les autres pneumatiques montés sur le véhicule peuvent être des pneumatiques pour roulage à plat ou non.

Généralement, les essais sont conduits de façon à ce que le pneumatique à évaluer en décoincement se trouve sur le véhicule du côté extérieur par rapport au centre de courbure de chacun des arcs de cercle formant la partie utile de la trajectoire, car c'est la position de la plus grande sollicitation mécanique. Cependant, il est également possible de conduire l'essai de façon à ce que le pneumatique à évaluer en décoincement se trouve sur le côté intérieur par rapport au centre de courbure de chacun des arcs de cercle, ou encore d'alterner les côtés intérieur et extérieur, soit en montant le pneumatique à évaluer successivement sur les deux côtés du véhicule, soit en alternant le sens de rotation du volant.

Lorsque des pneumatiques pour roulage à plat sont à évaluer, on utilisera de préférence une pression de gonflage nulle, car c'est à cette pression que le décoincement se produira le plus tôt.

### BREVE DESCRIPTION DES FIGURES

D'autres caractéristiques et avantages de l'invention ressortent de la description faite ci-après en référence aux figures annexées.

La figure 1 représente schématiquement un véhicule équipé d'un pneumatique à tester.

La figure 2 représente schématiquement une coupe partielle d'un ensemble formé par une roue et un pneumatique.

La figure 3 représente schématiquement la configuration d'un essai de décoincement selon l'art antérieur.

La figure 4 représente schématiquement des trajectoires possibles dans un essai de décoincement selon l'art antérieur.

Les figures 5 et 6 représentent schématiquement une coupe partielle d'un ensemble formé par une roue et un pneumatique lors d'un essai de décoincement, peu avant et après le décoincement.

Les figures 7 à 10 représentent schématiquement des trajectoire possibles dans un essai de décoincement selon l'invention.

La figure 11 montre l'évolution de l'accélération latérale en fonction de l'angle au volant pour plusieurs architectures de pneumatique.

La figure 12 représente schématiquement un diagramme permettant la classification de pneumatiques par rapport au décoincement.

### DESCRIPTION DE MODES DE REALISATION

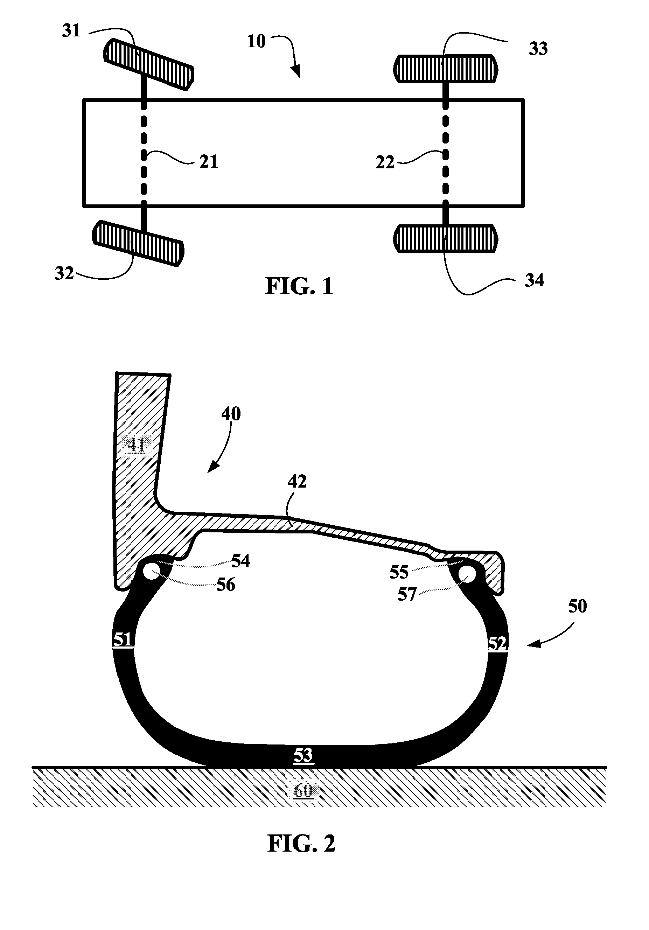

La figure 1 représente schématiquement un véhicule 10 équipé d'un essieu directeur 21 pourvu de deux ensembles pneumatique et roue 31 et 32 ainsi que d'un essieu non directeur 22 pourvu de deux ensembles pneumatique et roue 33 et 34.

La figure 2 représente schématiquement une coupe partielle d'un ensemble formé par une roue 40 (comprenant un disque 41 et une jante 42) et un pneumatique 50 comprenant une paire de bourrelets 54 et 55, contenant chacun une tringle 56, 57 qui y est noyée, une paire de parties de flanc 51, 52 et une bande de roulement 53 qui établit le contact entre le pneumatique et la surface de la chaussée 60.

La configuration d'un essai de décoincement selon l'art antérieur est représenté schématiquement à la figure 3. Le véhicule 10 est équipé d'un ensemble pneumatique et roue 32 comportant le pneumatique à tester, dont la pression de gonflage peut être nulle, est lancé à une vitesse constante (typiquement entre 40 et 60 km/h) sur une ligne droite 71, puis dans un virage de façon à ce que l'ensemble pneumatique et roue 32 parcoure une portion de trajectoire formée d'un arc de cercle dont le rayon de courbure R est prédéfini. Dans des essais de type « J-turn » ou « U-turn », le véhicule 10 parcourt un demi-cercle 72 avant de se déplacer au point de départ du passage suivant, mais il existe également des variantes où la trajectoire est prolongée d'une portion 73 de façon à former un cercle complet de rayon de courbure R.

Habituellement, on effectue un marquage sur le sol permettant au pilote de suivre la trajectoire idéale. Différents passages sont réalisés jusqu'à ce qu'un décoincement se produise. Les différents passages peuvent être réalisés à la même vitesse ou en augmentant progressivement la vitesse. Le nombre de passages sans décoincement sert d'indicateur de performance du pneumatique.

Bien évidemment, la trajectoire réelle parcourue par l'ensemble pneumatique et roue 32 s'éloigne quelque peu de la trajectoire idéale. L'essai est considéré valable lorsque l'ensemble pneumatique et roue 32 reste à l'intérieur des limites formées par les cercles de rayon R+ et R-. Ces limites, indiquées par des cercles en pointillé peuvent être matérialisées (marquage au sol, cônes de signalisation) ou non.

La figure 4 représente schématiquement des trajectoires possibles du pneumatique à évaluer dans un essai de décoincement selon l'art antérieur. La trajectoire idéale 81 (trait plein) est comparée à deux trajectoires réelles 82 (trait en tireté) et 83 (trait en pointillé). Les deux trajectoires sont considérées valables, dans la mesure où elles restent à l'intérieur des limites formées par les cercles de rayon R+ et R-. Lors du passage correspondant à la trajectoire 82, le pilote a modifié l'angle au volant trop tard pour suivre la trajectoire idéale 81 ; par la suite, il a choisi un angle au volant important pour rester à l'intérieur du cercle au rayon R+. Lors du passage correspondant à la trajectoire 83, le pilote a abordé le virage en choisissant un angle au volant élevé, puis corrigé cet angle vers des valeurs moins importantes. Bien entendu, le pneumatique n'a pas été sollicité de la même façon lors des passages 82 et 83. C'est cette marge de manoeuvre qui entraîne une reproductibilité non satisfaisante des essais de décoincement selon l'art antérieur.

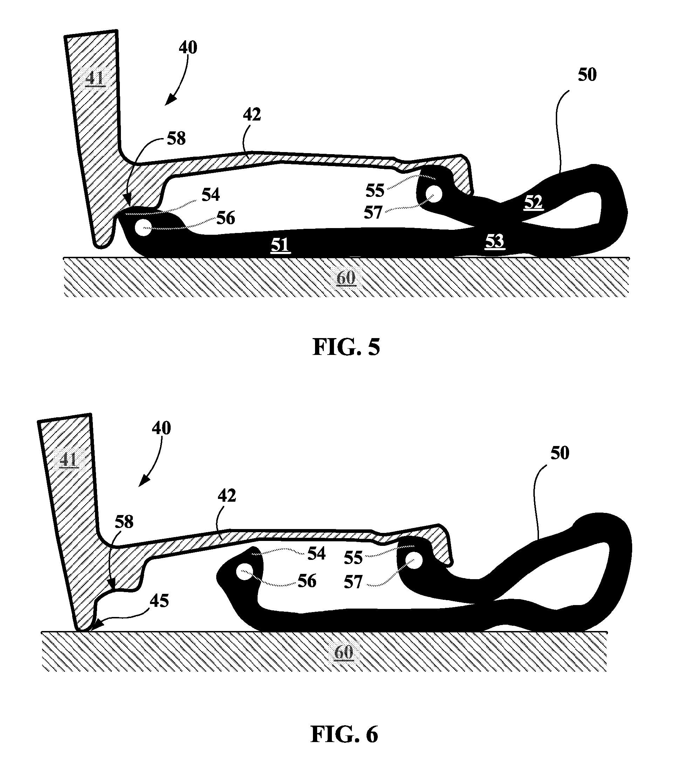

Les figures 5 et 6 représentent schématiquement une coupe partielle d'un ensemble formé par une roue 40 et un pneumatique 50 lors d'un essai de décoincement. La figure 5 montre le pneumatique 50 peu avant le décoincement. Sous l'effet des contraintes mécaniques très fortes, le pneumatique 50 s'aplatit dans la zone de contact avec la chaussée 60 de manière à ce que le flanc 51 du pneumatique qui se trouve du côté du pneumatique extérieur par rapport au centre de courbure de la trajectoire du véhicule 10 entre en contact avec la chaussée 60. Le bourrelet 54 a effectué une rotation autour de l'axe de la tringle 56 sans pour autant quitter son siège 58. Le flanc 52 qui se trouve du côté du pneumatique intérieur par rapport au centre de courbure de la trajectoire ainsi qu'une partie de la bande de roulement 53 du pneumatique forment une excroissance du côté du pneumatique intérieur par rapport au centre de courbure de la trajectoire.

La figure 6 montre le même pneumatique quelques instants après le décoincement. Le bourrelet 54 contenant la tringle 56 a quitté son siège 58, revenant à son orientation initiale avant la rotation autour de l'axe de la tringle 56. Le conducteur du véhicule détecte le décoincement par un changement brusque du comportement du pneumatique et éventuellement par le bruit généré par le frottement de la jante 42 sur la surface de la chaussée 60 au point 45.

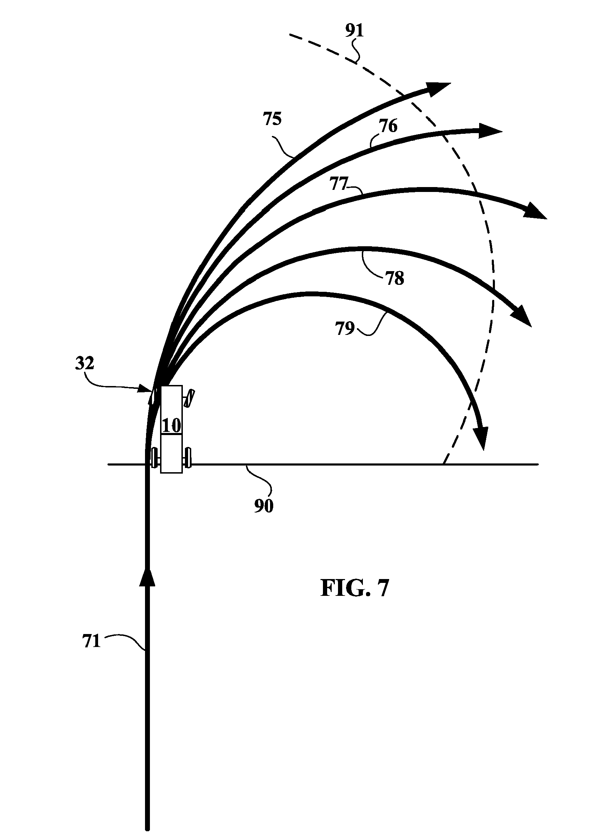

Les figures 7 à 9 représentent schématiquement des trajectoires possibles dans un essai de décoincement selon l'invention.

La figure 7 montre un mode de réalisation de l'invention qui enchaîne plusieurs passages du type « J-turn ». L'essai est effectué sur sol sec. L'essieu directeur 21 du véhicule 10 est équipé d'un ensemble pneumatique et roue 32 comportant le pneumatique à évaluer, dont la pression de gonflage peut être nulle. Le véhicule 10 est lancé à la vitesse constante de 60 km/h sur une ligne droite 71. Lorsque l'ensemble pneumatique et roue 32 franchit la ligne 90, le pilote augmente l'angle au volant avec une vitesse de rotation du volant supérieure à 300° par seconde. Les conditions de l'essai (montage du pneu, sens de rotation du volant) sont choisies de façon à ce que l'ensemble pneumatique et roue 32 se trouve sur le côté du véhicule 10 extérieur par rapport au centre de courbure de la portion de trajectoire. Dans l'exemple présent, l'angle au volant de départ a été fixé à 90°. Cette valeur se justifie par le fait que les accélérations latérales sont très faibles pour des angles au volant inférieurs à 90° : à 60 km/h, on mesure des valeurs de l'ordre de 0.1 g pour un angle au volant de 30°. A cela s'ajoute le fait que l'angle au volant n'est pas nul lorsque le véhicule avance en ligne droite si le pilote doit compenser le comportement du pneumatique dégonflé. L'angle au volant est maintenu pendant un temps prédéterminé ou sur une distance parcourue prédéterminée, en l'occurrence une distance de 30 mètres, correspondant au franchissement par l'ensemble pneumatique et roue 32 de la courbe 91, qui peut être matérialisée sur le sol. La portion de trajectoire parcourue par l'ensemble pneumatique et roue 32 correspond à un arc de cercle 75. L'accélération transversale du véhicule est enregistrée.

Si le pneumatique ne subit pas de décoincement, le véhicule 10 est ramené au point de départ de la première trajectoire, puis lancé à la vitesse constante de 60 km/h sur la ligne droite 71. Lorsque l'ensemble pneumatique et roue 32 franchit la ligne 90, le pilote augmente l'angle au volant avec une vitesse de rotation du volant supérieure à 300° par seconde. Dans l'exemple présent, l'angle au volant est augmenté à 120°. L'angle au volant est maintenu sur une distance de 30 mètres, jusqu'à ce que l'ensemble pneumatique et roue 32 franchisse la courbe 91. La portion de trajectoire parcourue par l'ensemble pneumatique et roue 32 correspond à un arc de cercle 76 dont le rayon de courbure est inférieur au rayon de courbure de l'arc de cercle 75. De nouveau, l'accélération transversale du véhicule 10 est enregistrée. On répète ces passages, en augmentant l'angle au volant par pas de 30° jusqu'à ce que au moins une condition choisie parmi : (i) le décoincement du pneumatique ou (ii) l'arrivée à la butée du volant du véhicule 10, soit atteinte. La figure montre les arcs de cercle 77 à 79 qui correspondent à des angles au volant de 150°, 180° et 210°.

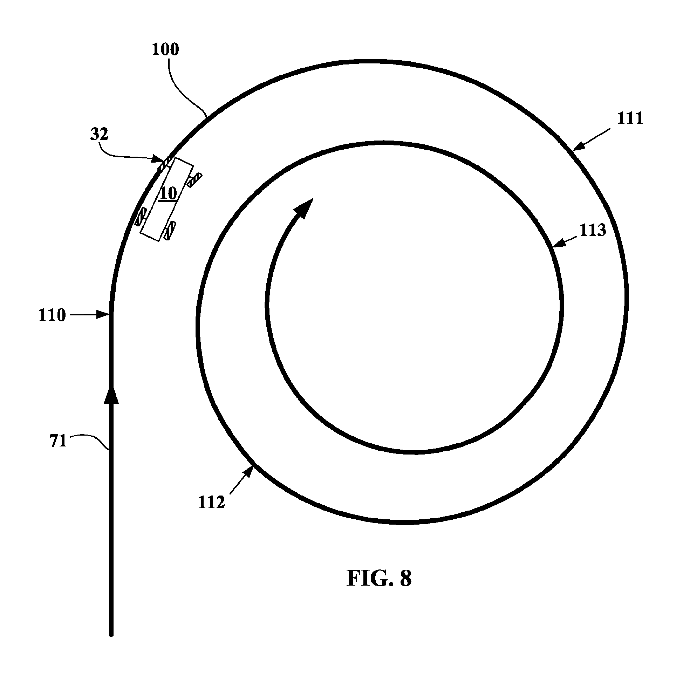

La figure 8 montre un deuxième mode de réalisation de l'invention où la trajectoire 100 parcourue par l'ensemble pneumatique et roue 32 jusqu'à atteindre l'une des deux conditions (i) ou (ii) est une succession ininterrompue d'arcs de cercle. Comme dans le mode de réalisation précédent, l'essieu directeur 21 du véhicule 10 est équipé d'un ensemble pneumatique et roue 32 comportant le pneumatique à évaluer, dont la pression de gonflage est nulle. Le véhicule est lancé à la vitesse constante de 60 km/h sur une ligne droite 71. Arrivé au point 110, le pilote augmente l'angle au volant avec une vitesse de rotation du volant supérieure à 500° par seconde. Les conditions de l'essai (montage du pneu, sens de rotation du volant) sont choisies de façon à ce que l'ensemble pneumatique et roue 32 se trouve sur le côté du véhicule 10 extérieur par rapport au centre de courbure de chaque portion de trajectoire. Dans l'exemple représenté, l'angle au volant est augmenté par pas de valeurs discrètes : il est maintenu pendant un temps prédéterminé ou sur une distance parcourue prédéterminée, en l'occurrence pendant deux secondes. Le sens de rotation du volant reste inchangé pendant la durée de l'essai.

La différence majeure par rapport au premier mode de réalisation concerne la trajectoire parcourue par l'ensemble pneumatique et roue 32 entre deux portions de trajectoire formées d'un arc de cercle. Au lieu de ramener le véhicule 10 au point de départ, le pilote procède immédiatement à l'augmentation de l'angle au volant, ce qui a pour effet que l'ensemble pneumatique et roue 32 parcourt une trajectoire en forme de spirale, composée d'une pluralité d'arcs de cercle dont les rayons de courbure diminuent progressivement. Les points 111 à 113 correspondent aux changements de l'angle au volant. On augmente l'angle au volant jusqu'à ce qu'au moins une condition choisie parmi : (i) le décoincement du pneumatique ou (ii) l'arrivée à la butée du volant du véhicule 10, soit atteinte. L'accélération transversale du véhicule 10 est enregistrée pour chaque valeur de l'angle au volant.

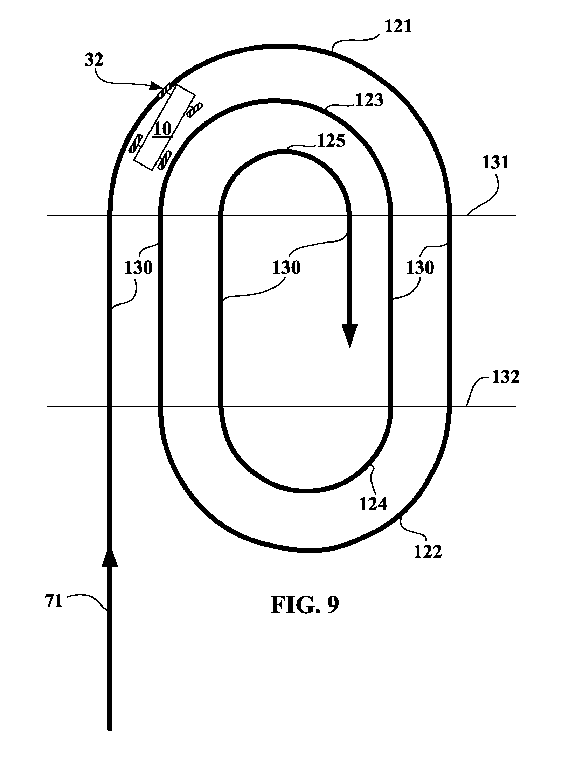

La figure 9 montre un autre mode de réalisation de l'invention dans lequel deux arcs de cercle successifs sont séparés par une portion de trajectoire intermédiaire. Comme dans le mode de réalisation précédent, l'essieu directeur 21 du véhicule 10 est équipé d'un ensemble pneumatique et roue 32 comportant le pneumatique à évaluer, dont la pression de gonflage est réduite par rapport à sa pression de service. Le véhicule est lancé à la vitesse constante de 60 km/h sur une ligne droite 71. Arrivé à la ligne 131, qui peut être matérialisée sur le sol, le pilote augmente l'angle au volant avec une vitesse de rotation du volant supérieure à 500° par seconde. Les conditions de l'essai (montage du pneu, sens de rotation du volant) sont choisies de façon à ce que l'ensemble pneumatique et roue 32 se trouve sur le côté du véhicule 10 extérieur par rapport au centre de courbure de chaque portion de trajectoire en arc de cercle. Dans l'exemple représenté, l'angle au volant est maintenu pendant le temps nécessaire pour que le véhicule franchisse de nouveau la ligne 131 ; l'ensemble pneumatique et roue 32 parcourt donc un demi-cercle 121. Ensuite, le pilote fait avancer le véhicule en ligne droite jusqu'à ce qu'il franchisse la ligne 132. Il augmente alors l'angle au volant de façon à ce que l'ensemble pneumatique et roue parcoure un deuxième arc de cercle 122 dont le rayon de courbure est inférieur à celui de l'arc de cercle 121. Lorsque l'ensemble pneumatique et roue 32 franchit de nouveau la ligne 132, le pilote fait avancer le véhicule en ligne droite jusqu'à la ligne 131 etc. La « partie utile » de la trajectoire est composée d'arcs de cercle 121-125 dont le rayon de courbure diminue progressivement. Le pilote augmente l'angle au volant progressivement jusqu'à ce qu'au moins une condition choisie parmi : (i) le décoincement du pneumatique ou (ii) l'arrivée à la butée du volant du véhicule 10, soit atteinte. L'accélération transversale du véhicule 10 est enregistrée pour chaque valeur de l'angle au volant.

Les conditions de réalisation de l'exemple représenté à la figure 9 ont été choisies de façon à obtenir une géométrie de trajectoire particulièrement simple. Une variante de l'exemple serait de garder les différents angles au volant pendant un temps prédéterminé unique (autrement dit, de parcourir des arcs de cercle de longueur égale) au lieu de parcourir des demi-cercles. Dans cette variante, il est plus difficile de matérialiser des repères du type 131 et 132 ; par conséquent, après chaque arc de cercle, le pilote fait avancer le véhicule en ligne droite pendant un temps prédéterminé.

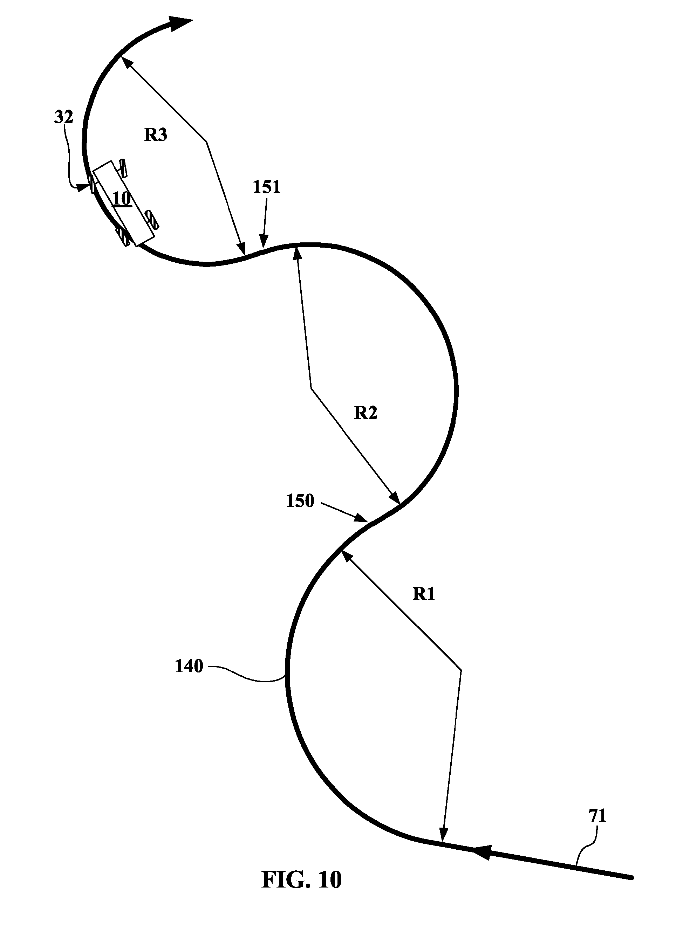

La figure 10 illustre un autre mode de réalisation de l'invention où la trajectoire 140 parcourue par l'ensemble pneumatique et roue 32 jusqu'à atteindre l'une des deux conditions
(i) ou (ii) est une succession ininterrompue d'arcs de cercle. La différence par rapport au deuxième mode de réalisation se situe dans le fait que deux rotations successives du volant, servant chacune à imposer un angle au volant, se font en sens opposé l'une par rapport à l'autre. Les points 150 et 151 correspondent aux inversions du sens de rotation du volant. L'ensemble pneumatique et roue 32 parcourt une trajectoire 140 en forme de serpentin composée d'une pluralité d'arcs de cercle dont les rayons de courbure diminuent progressivement : R1 > R2 > R3.
   Ce mode de réalisation peut être préférable lorsqu'on veut alterner le positionnement intérieur ou extérieur de l'ensemble pneumatique et roue 32 par rapport au centre de courbure de chacune des portions de trajectoire formées d'un arc de cercle, en particulier lorsqu'on veut évaluer simultanément deux ensembles pneumatique et roue montés sur le même essieu directeur. Dans ce cas, il peut être préférable de parcourir systématiquement deux arcs de cercle de même rayon de courbure, obtenus avec le même angle au volant, mais avec le sens de rotation du volant opposé, avant d'augmenter l'angle au volant et de diminuer le rayon de courbure. Ainsi, pour chaque rayon de courbure, chacun des deux pneumatiques est évalué sur la position intérieure et sur la position extérieure par rapport au centre de courbure.

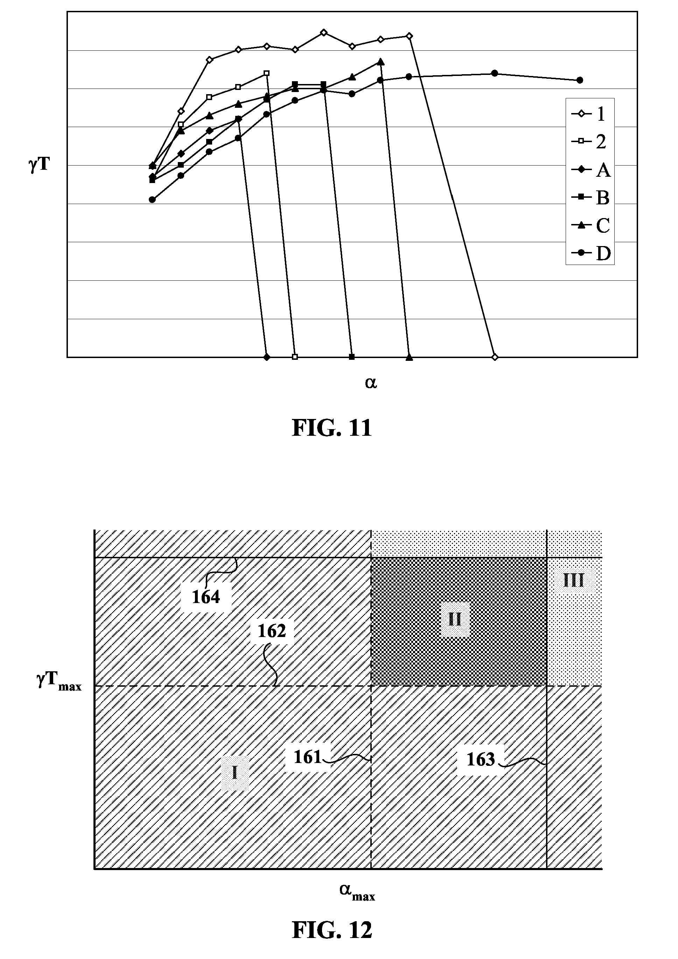

La figure 11 montre l'évolution de l'accélération transversale γT en fonction de l'angle au volant α, pour des pneumatiques de dimension 225/50R17. Les essais ont été effectués selon le premier mode de réalisation, avec un véhicule BMW 330 et à une vitesse de 60 km/h. L'accélération transversale maximale pendant chaque arc de cercle a été déterminée à l'aide d'un équipement de mesure (VBOX) embarqué. Les courbes « 1 » et « 2 » (symboles vides) correspondent à un pneumatique conventionnel, gonflé à 1 bar et 0.6 bar. Les courbes « A », « B », « C » et « D » (symboles pleins) correspondent à différents pneumatiques pour roulage à plat, à pression de gonflage nulle. Une valeur nulle de γT signifie que le pneu a subi un décoincement. Selon la conception choisie, les pneumatiques subissent un décoincement à des angles au volant différents : seul le pneumatique de conception « D » résiste au décoincement jusqu'à des angles au volant extrêmes.

Le tableau suivant illustre la reproductibilité des résultats obtenus. αₘₐₓ désigne l'angle au volant auquel l'essai a été arrêté, soit parce que le pneumatique a subi un décoincement, soit parce que la butée du volant a été atteinte ; γTₘₐₓ désigne l'accélération tranversale maximale mesurée. Trois pneumatiques de conception différente ont été testés à deux reprises.

| Pneumatique | Essai : | 1 | 2 | Valeur retenue |
|---|---|---|---|---|
| « E » | αₘₐₓ | 210 | 240 | 210 |
| | γTₘₐₓ | 0.68 | 0.72 | 0.68 |
| | Décoincement ? | oui | oui | |
| « F » | αₘₐₓ | 210 | 270 | 210 |
| | γTₘₐₓ | 0.67 | 0.75 | 0.67 |
| | Décoincement ? | oui | oui | |
| « G » | αₘₐₓ | 540 | 450 | 450 |
| | γTₘₐₓ | 0.70 | 0.70 | 0.70 |
| | Décoincement ? | non | oui | |

Bien entendu, ces résultats dépendent, entre autres, du véhicule utilisé, car selon les véhicules, le même angle au volant ne correspond pas au même angle au niveau du pneumatique.

Les valeurs αₘₐₓ et γTₘₐₓ permettent une classification de différents types de pneumatiques pour roulage à plat. La figure 12 représente schématiquement un diagramme permettant le classement d'un pneumatique en trois catégories. Les pneumatiques appartenant à la catégorie « I » subissent un décoincement à des angles au volant (en-deça du trait tireté 161) ou à des valeurs d'accélération transversale (en-dessous du trait tireté 162) qu'un usager non professionnel peut éventuellement atteindre ; ils sont donc considérés comme devant être améliorés. Les pneumatiques de la catégorie « III » ne subissent pas de décoincement, même aux angles correspondant à la butée du volant (trait plein 163), ou alors subissent un décoincement à des accélérations qui ne sont pas accessibles à un pilote non professionnel (au-delà du trait plein 164) ; ils peuvent être considérés comme satisfaisants. La catégorie intermédiaire « II » comprend les pneumatiques qui donnent satisfaction dans la grande majorité des cas, mais dont le comportement peut être limitant pour certains types de véhicule, certains pilotes etc.

Cette classification trinaire ne constitue qu'un exemple. Il est bien sûr possible de développer des critères plus fins sur la base des valeurs αₘₐₓ et γTₘₐₓ, permettant un classement objectif de différents types de pneumatiques.

Lorsqu'on souhaite établir un classement relatif de pneumatiques gonflés à une pression prédétermineé qui ne décoincent pas dans un essai effectué à une vitesse prédéterminée selon l'un des modes de réalisation décrits ci-dessus, il est possible de répéter les essais avec une pression de gonflage diminuée et/ou à une vitesse plus importante pour départager les pneumatiques.

La méthode selon l'invention permet d'obtenir un comparaison fine de la résistance au décoincement de différents types de pneumatiques à travers l'augmentation de l'angle au volant à vitesse constante. On peut envisager une autre méthode consistant à imposer un angle au volant fixe et à augmenter la vitesse jusqu'à obtenir le décoincement, mais cette méthode souffre d'un manque de reproductibilité de la montée en vitesse (difficulté d'accélérer sous un taux de dérive important) et nécessite une surface d'essai importante car le cercle parcouru par le véhicule s'élargit lorsque la vitesse augmente.

## Revendications

1. Méthode pour déterminer la résistance au décoincement d'au moins un pneumatique monté sur une jante de montage et gonflé à une pression prédéterminée, cette méthode consistant à :
(A) équiper un véhicule (10) avec le pneumatique sur une position d'un essieu directeur (21) ;
(B) mettre en mouvement le véhicule (10) et le stabiliser à une vitesse prédéterminée ;
(C) imposer, par rotation du volant, un angle au volant, et le maintenir pendant un temps prédéterminé, le véhicule (10) avançant à la vitesse prédéterminée, de manière à ce que le pneumatique parcoure une portion de trajectoire en arc de cercle (75-79 ; 121-125) ;
(D) répéter l'étape (C), en augmentant progressivement l'angle au volant jusqu'à ce qu'au moins une condition choisie parmi :
(i) le décoincement du pneumatique, ou
(ii) l'arrivée à la butée du volant du véhicule (10), soit satisfaite.

2. Méthode selon la revendication 1, **caractérisée en ce que**, avant chaque augmentation de l'angle au volant, le véhicule (10) est déplacé de manière à ce que toutes les portions de trajectoire en arc de cercle (75-79) aient sensiblement la même origine.

3. Méthode selon la revendication 1, **caractérisée en ce que** la trajectoire (100, 140) parcourue par le pneumatique pendant les étapes (3) et (4) est une succession ininterrompue d'arcs de cercle.

4. Méthode selon l'une des revendications précédentes, **caractérisée en ce que** deux rotations successives du volant, servant chacune à imposer un angle au volant, se font en sens opposé l'une par rapport à l'autre.

5. Méthode selon l'une des revendications précédentes, **caractérisée en ce que** l'angle au volant imposé est initialement égal à un angle α₀ différent de 0°, puis augmenté par pas d'angle Δα, Δα étant une fraction de l'angle α₀.

6. Méthode selon l'une des revendications précédentes, **caractérisée en ce que** les augmentations de l'angle au volant sont effectuées avec des vitesses de rotation du volant supérieures à 300° par seconde.

7. Méthode selon l'une des revendications précédentes, **caractérisée en ce que** le véhicule (10) dispose d'un moyen d'assistance pour obtenir rapidement un angle au volant prédéterminé.

8. Méthode selon l'une des revendications 1 à 3 et 5 à 7, **caractérisée en ce que** le pneumatique à évaluer se trouve sur le véhicule (10) du côté extérieur par rapport au centre de courbure de chacun des arcs de cercle (75-79 ; 121-125) de la trajectoire.

9. Méthode selon l'une des revendications précédentes, **caractérisée en ce que** les essais sont réitérés à une vitesse supérieure à la vitesse prédéterminée.

10. Méthode selon l'une des revendications précédentes, **caractérisée en ce que** la pression de gonflage du pneumatique à évaluer est nulle.
